# EUROPEAN PATENT SPECIFICATION

(11) **EP 3 049 229 B1**
(45) Date of publication and mention of the grant of the patent: **09.09.2020**
(21) Application number: 14849055.0
(22) Date of filing: 26.09.2014
(51) Int. Cl.: B29C 45/17, B29C 67/24, B29C 35/08

(54) **APPARATUS AND METHOD FOR MAKING AN ARTICLE**
VORRICHTUNG UND VERFAHREN ZUR HERSTELLUNG EINES ARTIKELS
APPAREIL ET PROCÉDÉ DE FABRICATION D'UN ARTICLE

(30) Priority: 27.09.2013 US 201361883400 P
(43) Date of publication of application: 03.08.2016
(73) Proprietor: Saint-Gobain Performance Plastics Corporation, Solon, OH 44139 (US)
(72) Inventor: SEREBRENNIKOV, Boris L., Shrewsbury, Massachusetts 01545 (US); ZHU, Aijun, Acton, Massachusetts 01720 (US); MAHFOUD-FAMILIA, Aziz, Summerfield, NC 27358 (US)
(74) Representative: Zimmermann & Partner Patentanwälte mbB
(86) International application number: PCT/US2014/057770
(87) International publication number: WO 2015/048483

(56) References cited:
- WO-A1-2011/155896
- WO-A1-2012/170008
- JP-A- H0 847 943
- JP-A- 2010 110 894
- US-A- 5 885 514
- US-A- 5 904 887
- US-A- 5 965 170
- US-A1- 2003 197 296
- US-A1- 2013 026 682
- US-A1- 2013 062 818

## Description

### TECHNICAL FIELD

The disclosure, generally, is related to an apparatus and method for forming an article, and more particularly, an injection molded article.

### BACKGROUND ART

Many industries utilize heat curing for silicone articles that are produced by injection molding processes. The silicone articles are typically formed by heat curing silicone formulations at an elevated temperature. For instance, temperatures in excess of at least 140°C are used for the heat cure. For particular multiple component injection molded articles, the temperatures used for thermal cure of the silicone formulation often exceed the melting temperature of many desirable substrates.

Accordingly, silicone formulations have typically been commercially injection molded with high melt temperature substrates for multiple component injection molded articles. These multiple component injection molded articles are typically expensive since they are limited to high melt temperature substrates. Low melt temperature substrates would be desirable since they are often more cost effective; however, there has been considerable difficulty with injection molding silicone formulations with low melt temperature substrates. Unfortunately, the heat required for thermal cure of the silicone formulation prevents the use of many thermoplastic and thermoset materials that would degrade and deform at such temperatures. Furthermore, adhesion between dissimilar materials such as silicone formulations and thermoplastic or thermoset materials can be problematic, such that adhesion promoters, primers, chemical surface treatments, or even mechanical treatments must be used to provide the adhesion required for specific applications.

Accordingly, an improved method and apparatus to form an injection molded article are desired.

WO 2012/170008 A1 discloses a method of producing a shaped article from a UV-curable silicone rubber composition by irradiating said UV-silicone rubber composition with UV-light.

US 5,885,514 A discloses a molding process for low pressure, room-temperature molding of UV-curable elastomers. The process comprises injecting elastomeric material between upper and lower gasket molding plates in opposing relation, which molding plates are transparent to UV radiation, and curing the elastomeric material with UV irradiation.

### DISCLOSURE OF INVENTION

Subject matter of the present invention is an apparatus for forming an injection molded article as defined in claim. 1. The dependent claims relate to particular embodiments thereof. The apparatus includes a mold having an exterior housing and an interior cavity therein. The apparatus further includes a first pumping system to deliver a first polymer material to the mold, the first polymer material comprising a thermoplastic polymer or a thermoset polymer, and a second pumping system to deliver a silicone formulation to a mold, the silicone formulation having a viscosity of about 50 to about 2,000 Pa•s (50,000 centipoise to 2,000,000 centipoise). The first polymer material and the silicone formulation flow into the cavity of the mold. The apparatus further includes a source of radiation energy, wherein the radiation energy substantially cures the silicone formulation within the cavity of the mold to form the injection molded article.

Further subject matter of the present invention is a method of forming an injection molded article as defined in claim 2. The method includes providing a first polymer material with a first pumping system, wherein the first polymer material comprises a thermoplastic polymer or a thermoset polymer, and providing a silicone formulation within a second pumping system, wherein the silicone formulation has a viscosity of about 50 to about 2,000 Pa•s (50,000 centipoise to 2,000,000 centipoise). The method further includes providing a mold having an exterior housing and an interior cavity therein, delivering the first polymer material to the cavity of the mold, delivering the silicone formulation from the pumping system to the cavity of the mold; and irradiating the first polymer material, the silicone formulation or combination thereof with a radiation source to substantially cure the silicone formulation within the cavity of the mold to form the injection molded article.

Further disclosed herein is a mold for an injection molded article is provided. The mold includes an exterior housing and an interior cavity therein, wherein the interior cavity is configured for receipt of a first polymer material and a silicone formulation, the first polymer material comprising a thermoplastic polymer or a thermoset polymer, the mold comprising a port to the cavity to provide the first polymer materialto the cavity, the silicone formulation having a viscosity of about 50 to about 2,000 Pa•s (50,000 centipoise to about 2,000,000 centipoise); and a source of radiation energy, wherein the radiation energy substantially cures the silicone formulation within the cavity of the mold to form the injection molded article.

### BRIEF DESCRIPTION OF THE DRAWINGS

The present disclosure may be better understood, and its numerous features and advantages made apparent to those skilled in the art by referencing the accompanying drawings.
FIG. 1 is a diagram of an embodiment of an apparatus to make an injection molded article.
FIG. 2 is a flow diagram of a process to make an injection molded article.

Skilled artisans appreciate that elements in the figures are illustrated for simplicity and clarity and have not necessarily been drawn to scale. For example, the dimensions of some of the elements in the figures may be exaggerated relative to other elements to help to improve understanding of embodiments of the invention.

### DETAILED DESCRIPTION OF THE PREFFERED EMBODIMENT(S)

The following description in combination with the figures is provided to assist in understanding the teachings disclosed herein. The following discussion will focus on specific implementations and embodiments of the teachings. This focus is provided to assist in describing the teachings and should not be interpreted as a limitation on the scope or applicability of the teachings.

As used herein, the terms "comprises," "comprising," "includes," "including," "has," "having" or any other variation thereof, are open-ended terms and should be interpreted to mean "including, but not limited to.... " These terms encompass the more restrictive terms "consisting essentially of' and "consisting of." A method, article, or apparatus that comprises a list of features is not necessarily limited only to those features but may include other features not expressly listed or inherent to such method, article, or apparatus. Further, unless expressly stated to the contrary, "or" refers to an inclusive-or and not to an exclusive-or. For example, a condition A or B is satisfied by any one of the following: A is true (or present) and B is false (or not present), A is false (or not present) and B is true (or present), and both A and B are true (or present).

Also, the use of "a" or "an" is employed to describe elements and components described herein. This is done merely for convenience and to give a general sense of the scope of the invention. This description should be read to include one or at least one and the singular also includes the plural, or vice versa, unless it is clear that it is meant otherwise. For example, when a single item is described herein, more than one item may be used in place of a single item. Similarly, where more than one item is described herein, a single item may be substituted for that more than one item.

Unless otherwise defined, all technical and scientific terms used herein have the same meaning as commonly understood by one of ordinary skill in the art to which this invention belongs. The materials, methods, and examples are illustrative only and not intended to be limiting. To the extent not described herein, many details regarding specific materials and processing acts are conventional and may be found in reference books and other sources within the structural arts and corresponding manufacturing arts. Unless indicated otherwise, all measurements are at about 25°C. For instance, values for viscosity are at 25°C, unless indicated otherwise.

The disclosure generally relates to an apparatus for forming an article, such as an injection molded article. The apparatus includes a first pumping system to deliver a first polymer material to a mold, and a second pumping system to deliver a silicone formulation to the mold. The mold has an exterior housing and an interior cavity therein, wherein the first polymer material and the silicone formulation flow into the cavity of the mold. The apparatus further includes a source of radiation energy, wherein the radiation energy substantially cures the silicone formulation within the cavity of the mold. In an embodiment, the apparatus is configured to provide any number of polymer materials to the mold to provide a multiple component injection molded article. The first polymer material may be a thermoplastic polymer or a thermoset polymer. In an example, the apparatus is configured so that an adhesive strength between the first polymer material and the silicone formulation is improved within the interior cavity of the mold. Further, the apparatus is configured so that it may cure the silicone formulation within the interior cavity of the mold. An improved method of forming an injection molded article is further provided.

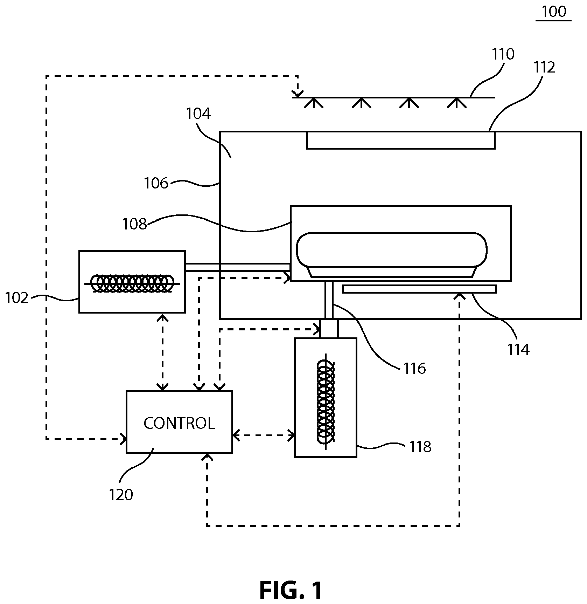

FIG. 1 is a diagram of an apparatus 100 to make an injection molded article. The apparatus 100 includes a first pumping system 102. Any pumping system 102 is envisioned. The pumping system 102 may include any reasonable means to deliver a first polymer material such as pneumatically, hydraulically, gravitationally, mechanically, and the like, or combinations thereof. In an example, the pumping system 102 delivers the first polymer material to a mold 104. The mold 104 includes an exterior housing 106 and an interior cavity 108 therein. The interior cavity 108 may be configured in any shape desired for the final injection molded article (not shown). The first polymer material flows into the interior cavity 108 of the mold 104.

The first polymer material may be any thermoplastic polymer or thermoset polymer envisioned. In a particular example, the first polymer material is a polycarbonate, a polystyrene, an acrylonitrile butadiene styrene, a polyester, a copolyester (coPETS), a silicone polymer, a fluoropolymer, polyethylene, polypropylene, any other commodity thermoplastic resin, an engineering thermoplastic resin, or any combination thereof. The thermoplastic polymer or thermoset polymer may be formed with any reasonable component such as any precursors with the addition of any catalyst, any filler, any additives, or combination thereof. Any reasonable catalyst that can initiate crosslinking of the first polymer is envisioned. In an example, the additive includes any reasonable adhesion promoter. Any reasonable adhesion promoter is envisioned and is dependent upon the first polymer. In an example, the adhesion promoter is used with a silicone polymer, wherein the adhesion promoter is a silane, such as 3-methacryloxypropyltrimethoxysilane, 3-glycidoxypropyltrimethoxysilane, vinyl-tris(2-methoxyethoxy)-silane; 2,5,7,10-tetraoxa-6-silaundecane, 6-ethenyl-6-(2-methoxyethoxy)-silane, or any combination thereof. In a particular example, the precursor, the catalyst, the filler, the additive, or combination thereof are dependent upon the first polymer chosen and final properties desired for the injection molded article.

The apparatus 100 further includes a source of radiation energy 110. The source of radiation energy 110 is provided to the interior cavity 108 of the housing 106. The source of radiation energy 110 may be in any reasonable configuration to deliver the radiation energy to the interior cavity 108 of the housing 106. For instance, the source of radiation energy 110 can be delivered to any portion of the interior cavity 108, such as one side of the cavity 108, on opposing sides of the cavity 108, on adjacent sides of the cavity 108, or even circumferentially to the cavity 108. Delivery may further include direct radiation energy, radiation energy through fiber optic cables, or any combination thereof. As illustrated, the source of radiation energy 110 is external to the housing 106 of the mold 104. Although not illustrated, the source of radiation energy 110 may be contained within the housing 106. For instance, the source of radiation energy 110 may be disposed between the exterior housing 106 and the interior cavity 108.

In an embodiment, the radiation energy is configured to provide improved properties to the a first polymer material depending upon the polymer material and the final result desired. For instance, the radiation energy is configured to at least provide a surface treatment to the first polymer material. In an embodiment, the radiation energy substantially cures the material within the cavity of the mold 104, i.e. in situ, to form the injection molded article. The source of radiation energy 110 can include any reasonable radiation energy source such as actinic radiation. In a particular embodiment, the radiation source is ultraviolet light. Any reasonable wavelength of ultraviolet light is envisioned. In a specific embodiment, the ultraviolet light is at a wavelength of about 10 nanometers to about 410 nanometers. Further, any number of applications of radiation energy may be applied with the same or different wavelengths, depending upon the material and the desired result.

In a particular embodiment, the radiation source is sufficient to substantially treat the surface of the first polymer material. For instance, the radiation source is sufficient to substantially treat the surface of the first polymer material to increase the adhesion of the first polymer material, such as the thermoplastic material or the thermoset material, to the polymer material it directly contacts, for instance, the silicone formulation. In an exemplary embodiment, the surface treatment increases the adhesion of the first polymer material to the silicone formulation. In an embodiment, the surface treatment enables adhesion between the two materials to provide cohesive bonding, i.e. cohesive failure occurs wherein the structural integrity of the first polymer material and/or the silicone formulation material fails before the bond between the two materials fails. In an embodiment, the radiation source is sufficient to substantially cure at least one polymer material, such as the silicone formulation. "Substantially cure" as used herein refers to > 90% of final crosslinking density, as determined for instance by rheometer data (90% cure means the material reaches 90% of the maximum torque as measured by ASTM D5289). For instance, the level of cure is to provide an injection molded article having a desirable durometer. In an embodiment, the final durometer of the silicone formulation depends on the material chosen for the silicone formulation.

At least a portion 112 of the interior cavity 108 is substantially transparent to the radiation source 110. The portion 112 of the interior cavity 108 is substantially transparent to provide the transmission of the radiation source 110 into the interior cavity 108 of the apparatus 100 and to the first polymer material, the silicone formulation, or combination thereof contained within the interior cavity 108. "Substantial transparency" as used herein refers to a material wherein about 1% to about 100%, such as at least about 25%, or even at least about 50% of the radiation source, such as ultraviolet light at about 10 nanometers to about 410 nanometers, can radiate through the portion 112 of the housing 106 to provide radiation to the first polymer material, the silicone formulation, or combination thereof within the interior cavity 108. In a more particular embodiment, the transmission is greater than about 50% at about 300 nanometers. For instance, the portion 112 of the interior cavity 108 that is substantially transparent to the radiation source 110 may include a window. In an embodiment, the window is a quartz, a glass, a polymer, or combination thereof. The polymer for the window may be, for example, polymethyl methacrylate (PMMA), polystyrene, or combination thereof. Transparency typically is dependent upon the wavelength of the radiation source, the material, and the thickness of the material. For instance, PMMA has about 80% transmission at about 300 nm at 3mm thickness. For quartz, the transmission may be greater than about 90% from about 200 nm to about 500 nm for a 10 mm thickness.

The apparatus 100 may further include a source of heat 114 for thermal treatment of the first polymer material, the silicone formulation, or combination thereof within the cavity of the mold. Any source of thermal treatment is envisioned. In an embodiment, the source of thermal treatment includes, for example, an electric resistive heating element, an externally heated thermal fluid pumped through at least one channel in the mold, or combination thereof. Any temperature for thermal treatment is envisioned. In an embodiment, the thermal treatment is at a temperature not greater than the glass transition temperature or heat deflection temperature (HDT) of the first polymer material. In an embodiment, thermal treatment occurs at a low temperature. "Low temperature" is defined herein as the temperature below the heat deflection (HDT) of the first polymer material and is dependent upon the material. Exemplary thermal treatment includes temperatures, for instance, of greater than about 20°C, such as greater than about 100°C, or even greater than about 150°C. In a particular embodiment, the temperature is about 20°C to about 200°C, such as about 20°C to about 150°C, such as about 20°C to about 100°C, or even about 40°C to about 80°C. In an embodiment, the source of radiation and the thermal treatment may occur concurrently, in sequence, or any combination thereof. In a particular embodiment, the source of radiation and thermal treatment occurs concurrently. In a particular embodiment, the application of the radiation energy and the thermal treatment provides an increased adhesive bond between the first polymer material and the silicone formulation. In a more particular embodiment, a cohesive bond is achieved between the first polymer material and the silicone formulation, i.e. cohesive failure occurs wherein the structural integrity of the first polymer material and/or the silicone formulation fails before the bond between the two materials fails.

In a particular embodiment, the application of the radiation energy and the thermal treatment provide a cure time that is 20% faster compared to a cure with a single source of energy. In a more particular embodiment, the application of the radiation energy and the thermal treatment provide a cure time for the silicone formulation that is 20% faster compared to a cure with a single source of energy.

In an embodiment, the apparatus 100 includes a port 116 to the cavity 108, the port 116 configured for connection to the second pumping system 118 to provide the silicone formulation to the cavity 108. Any pumping system 118 is envisioned. The pumping system 118 may include any reasonable means to deliver the silicone formulation such as pneumatically, hydraulically, gravitationally, mechanically, and the like, or combinations thereof.

Prior to flowing to the inner cavity 108 and prior to cure, the silicone formulation has a viscosity of about 50 to about 2,000 Pa•s (50,000 centipoise (cPs) to 2,000,000 cPs), such as about 200 to about 1,000 Pa•s (200,000 cPs to 1,000,000 cPs), such as about 500 to about 800 Pa•s (500,000 cPs to 800,000 cPs). In an embodiment, the low viscosity silicone formulation is a liquid silicone rubber (LSR) or a liquid injection molding silicone (LIM), a room temperature vulcanizing silicone (RTV), or a combination thereof. In a particular embodiment, the low viscosity silicone formulation is a liquid silicone rubber or a room temperature vulcanizing silicone.

The silicone formulation may, for example, include polyalkylsiloxanes, such as silicone polymers formed of a precursor, such as dimethylsiloxane, diethylsiloxane, dipropylsiloxane, methylethylsiloxane, methylpropylsiloxane, or combinations thereof. In a particular example, the polyalkylsiloxane includes a polydialkylsiloxane, such as polydimethylsiloxane (PDMS). In a particular example, the polyalkylsiloxane is a silicone hydride-containing polyalkylsiloxane, such as a silicone hydride-containing polydimethylsiloxane. In a further example, the polyalkylsiloxane is a vinyl-containing polyalkylsiloxane, such as a vinyl-containing polydimethylsiloxane. In yet another example, the silicone polymer is a combination of a hydride-containing polyalkylsiloxane and a vinyl-containing polyalkylsiloxane, such as a combination of hydride-containing polydimethylsiloxane and a vinyl-containing polydimethylsiloxane. In an example, the silicone polymer is non-polar and is free of halide functional groups, such as chlorine and fluorine, and of phenyl functional groups. Alternatively, the silicone polymer may include halide functional groups or phenyl functional groups. For example, the silicone polymer may include fluorosilicone or phenylsilicone.

The silicone formulation may further include a catalyst. Typically, the catalyst is present to initiate the crosslinking process. Any reasonable catalyst that can initiate crosslinking when exposed to a radiation source is envisioned. Typically, the catalyst is dependent upon the silicone formulation. In a particular example, the catalytic reaction includes aliphatically unsaturated groups reacted with Si-bonded hydrogen in order to convert the addition-crosslinkable silicone formulation into the elastomeric state by formation of a network. The catalyst is activated by the radiation source and initiates the crosslinking process.

Any catalyst is envisioned depending upon the silicone formulation, with the proviso that at least one catalyst can initiate crosslinking when exposed to the radiation source, such as ultraviolet radiation. In an example, a hydrosilylation reaction catalyst may be used. For instance, an exemplary hydrosilylation catalyst is an organometallic complex compound of a transition metal. In an example, the catalyst includes platinum, rhodium, ruthenium, the like, or combinations thereof. In a particular example, the catalyst includes platinum. Further optional catalysts may be used with the hydrosilylation catalyst. Exemplary optional catalysts may include peroxide, tin, or combinations thereof. Alternatively, the silicone formulation further includes a peroxide catalyzed silicone formulation. In another example, the silicone formulation may be a combination of a platinum catalyzed and peroxide catalyzed silicone formulation.

The silicone formulation may further include an additive. Any reasonable additive is envisioned. Exemplary additives may include, individually or in combination, a vinyl polymer, a hydride, an adhesion promoter, a filler, an initiator, an inhibitor, a colorant, a pigment, a carrier material, or any combination thereof. For instance, the additive may include an adhesion promoter such as a silane, such as 3-methacryloxypropyltrimethoxysilane, 3-glycidoxypropyltrimethoxysilane, vinyl-tris(2-methoxyethoxy)-silane; 2,5,7,10-tetraoxa-6-silaundecane, 6-ethenyl-6-(2-methoxyethoxy)-silane, or any combination thereof. In an example, the material content of the silicone article is essentially 100% silicone formulation. In some examples, the silicone formulation consists essentially of the respective silicone polymer described above. As used herein, the phrase "consists essentially of' used in connection with the silicone formulation precludes the presence of non-silicone polymers that affect the basic and novel characteristics of the silicone formulation, although, commonly used processing agents and additives may be used in the silicone formulation.

The silicone formulation may include a conventional, commercially prepared silicone formulation. The commercially prepared silicone formulation typically includes components such as the non-polar silicone polymer, the catalyst, a filler, and optional additives. Any reasonable filler and additives are envisioned. Particular examples of a commercially available liquid silicone rubber (LSR) include Wacker Elastosil® LR 3003/50 by Wacker Silicone of Adrian, MI and Rhodia Silbione® LSR 4340 by Rhodia Silicones of Ventura, CA.

Further, the components of the silicone formulation may be processed by any method envisioned. For instance, processing may include heating any combination of the components of the silicone formulation to any temperature envisioned so that it has a desirable viscosity for delivery such that the silicone formulation may flow into the mold 104. Although illustrated as one port 116 for the silicone formulation, any number of ports are envisioned which can deliver at least one polymer into the mold 104.

In an example, the mold 104 may be configured to deliver the first polymer material prior to providing the silicone formulation. In an alternative example, the mold 104 may be configured to provide the silicone formulation material prior to providing the first polymer material. In a particular example, the first polymer material is provided, the first polymer material having a surface. In an exemplary example, the surface of the first polymer material is treated with at least the radiation energy prior to providing the silicone formulation to provide enhanced bonding of the silicone formulation to the first polymer material. In an example, the surface of the first polymer material is treated prior to being placed in the mold, in situ in the mold, or combination thereof. In an example, the silicone formulation and the first polymer material are treated with at least the radiation source when the silicone formulation and the first polymer material are in direct contact. For instance, the radiation treatment of the first polymer material when in direct contact with the silicone formulation provides an in situ treatment within the mold for increased adhesion between the first polymer material and the silicone formulation without any pre-treatment of a surface of the silicone formulation, a surface of the first polymer material, or combination thereof. In a particular example, the radiation treatment provides an enhanced bonding of the first polymer material to the silicone formulation.

When thermal treatment is used in conjunction with the radiation source, it may enhance the adhesion reaction rate between the first polymer and the silicone formulation. For instance, a combination of the radiation energy and the thermal treatment provides an adhesion reaction rate of the silicone formulation to a first polymer material, wherein the adhesion reaction rate is 20% faster compared to a cure with a single source of energy. In an exemplary example, thermal treatment used in conjunction with the radiation source may provide increased adhesion between the first polymer material and the silicone formulation. In particular, increased adhesion may occur with thermal treatment at a low temperature. Exemplary thermal treatment includes temperatures, for instance, of greater than about 20°C, such as greater than about 100°C, or even greater than about 150°C. In a particular example, the temperature is about 20°C to about 200°C, such as about 20°C to about 150°C, such as about 20°C to about 100°C, or even about 40°C to about 80°C. In a more particular example, a cohesive bond is achieved between the first polymer material and the silicone formulation, i.e. cohesive failure occurs wherein the structural integrity of the first polymer material and/or the silicone formulation fails before the bond between the two materials fails.

The apparatus can also include a control system 120 that includes one or more computing devices. The control system 120 can provide signals to one or more of the components of the apparatus 100 to specify operating conditions for the components. For example, the control system 120 can adjust a speed of the pumping system 102, 118. For instance, the control system 120 can adjust the level of radiation of the radiation source 110, the level of thermal treatment from a source of heat 114, or combination thereof. Further, the control system 120 can adjust any conditions envisioned.

In certain instances, the signals provided by the control system 120 can be based, at least partly, on feedback information provided by one or more sensors (not shown) of the apparatus 100. Any reasonable sensor is envisioned. In some examples, the one or more sensors can be part of a component of the apparatus 100, such as a pressure sensor of the pumping system 102 for the first polymer material, a sensor of the inner cavity 108, a sensor of the components providing the radiation source 110, a sensor of the heat source 114, a sensor for the port 116 and/or pumping system 118 for the silicone formulation, or any combination thereof.

The apparatus 100 can operate to form any reasonable injection molded article. For instance, any injection molded article may be envisioned. In a particular example, the injection molded article is a 2-dimensional article where the thickness is significantly smaller than the other two dimensions or a 3-dimentional article where the thickness is comparable to the other two dimensions of either open or closed geometry, and the like. An exemplary article includes, but is not limited to, a gasket, a seal, a diaphragm, an o-ring, and other items. The injection molded article may include any number of layers, any number of protrusions, or combination thereof. Further, the injection molded article may include any number of thermoplastic polymers, thermoset polymers, or combination thereof in conjunction with the silicone formulation.

In a particular example, the apparatus 100 can form injection molded articles that are not achieved by conventional injection molding manufacturing processes. In particular, the radiation source 110 of the apparatus 100 and the configuration of the apparatus 100 are conducive to forming injection molded articles with at least one polymeric material, or even at least two polymeric materials that conventional injection molded systems are not able to produce. For instance, the apparatus 100 and the processing conditions can provide a cured article of a silicone material in direct contact with a first polymer material. In an example, the radiation source 110 surface treats the first polymer material to provide an injection molded article having desirable adhesion to the silicone formulation. In a particular example, the radiation source 110 cures the silicone formulation to provide an injection molded article with desirable and in some cases, improved properties compared to an injection molded article cured by conventional heat cure. "Conventional heat cure" as used herein refers to curing via heat at a temperature greater than about 150°C.

Although a typical apparatus and process is described, any variations may be envisioned that delivers the first polymer material to the mold and provides an energy source to the first polymer material. For example, the apparatus can include any additional features such as a gear pump, a static mixer, a post-processing device, or any combination thereof.

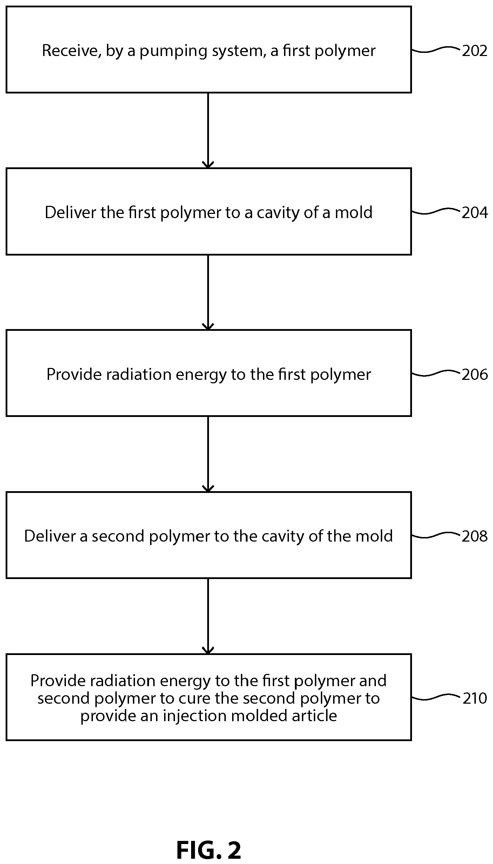

FIG. 2 is a flow diagram of a method 200 to make an injection molded article according to an example. At 202, the process 200 includes receiving, by a pumping system, the first polymer material as described above. The pumping system can include any number of devices envisioned that can be utilized to form the injection molded article.

At 204, the process 200 includes delivering the first polymer material to a cavity of a mold. Typically, the first polymer material is mixed before being provided to the cavity. Any reasonable mixing apparatus is envisioned. In an example, the first polymer material may be temperature controlled within the pumping system. Temperature control may include heating, cooling, or any combination thereof. For instance, any reasonable temperature control for the components of the first polymer may be used to provide a material that can flow from the pumping system and to the interior cavity of the mold without degradation of the first polymer material. The temperature is typically dependent upon on the material chosen for the first polymer material.

In an example, the process 200 includes providing radiation energy to the first polymer material at 206. Any reasonable radiation source is envisioned such as actinic radiation. In an example, the radiation source is ultraviolet light (UV). In a particular example, the radiation can occur while the first polymer material is within the interior cavity of the mold. In a more particular example, the radiation can provide a surface treatment to the surface of the first polymer material. Further, thermal treatment may be applied. In an example, the first polymer may be subjected to the radiation source and the thermal treatment in sequence, concurrently, or any combination thereof.

At 208, the silicone formulation may be delivered to the cavity, such as via a pumping system. Typically, the silicone formulation is mixed before being provided to the cavity. Any reasonable mixing apparatus is envisioned. In an example, heat may also be applied to the silicone formulation within the pumping system. For instance, any reasonable heating temperature for the components of the silicone formulation may be used to provide a material that can flow from the pumping system and to the interior cavity of the mold without degradation of the silicone formulation. For instance, the temperature may be about 50°F to about 150°F.

Any reasonable processing operations are envisioned once the silicone formulation is provided to the interior cavity of the mold. For instance, at 210 the first polymer and the silicone formulation may be subjected to a radiation source. Any reasonable radiation source is envisioned such as actinic radiation. In an example, the radiation source is ultraviolet light (UV). In a particular example, the radiation curing can occur while the silicone formulation is within the interior cavity of the mold to form the injection molded article. In an example, the first polymer and the silicone formulation may be subjected to a heat treatment. In a particular example, the heat treatment is at a low temperature. In an example, the first polymer and the silicone formulation may be subjected to the radiation source and the heat treatment in sequence, concurrently, or any combination thereof.

Any order of delivery of the first polymer material, delivery of the silicone formulation, radiation source, heat treatment, or combination thereof is envisioned. Although the silicone formulation is described in this example as being delivered after the first polymer material is delivered to the interior cavity, the silicone formulation may be delivered prior to delivery of the first polymer material or concurrently with the first polymer material. In a particular example, the first polymer is delivered to the interior cavity of the mold prior to the delivery of the silicone formulation. In an example and prior to delivery of the silicone formulation to the interior cavity of the mold, the first polymer material is subjected to an in situ radiation source, a heat treatment, or combination thereof. The radiation source, the heat treatment, or combination thereof can provide a surface of the first polymer that has increased adhesion to the silicone formulation when the silicone formulation is delivered to the interior cavity of the mold. After delivery of the silicone formulation to the interior cavity of the mold, the silicone formulation may be subjected to an in situ radiation source, a heat treatment, or combination thereof to substantially cure the silicone formulation and form the injection molded article. In an example, the radiation source, the heat treatment, or combination thereof does not occur until after the first polymer material and the silicone formulation are delivered to the interior cavity of the mold and the silicone formulation is in direct contact with the first polymer material to provide improved adhesion between the silicone formulation and the first polymer material as well as substantially cure the silicone formulation to form the injection molded article.

Once formed and cured, particular examples of the above-disclosed apparatus advantageously exhibit desired properties such as increased productivity and an improved injection molded article. For example, the final properties of the injection molded article can be designed during in-line production. Furthermore, the cure of the injection molded article provides a final product with increased adhesion of the first polymer material to the silicone formulation, compared to an injection molded article that is conventionally molded and heat cured. Although not being bound by theory, it is believed that the radiation provides instant penetration of the radiation into the first polymer, or combination thereof and curing of the first polymer concurrently. In an exemplary example, it is believed that the radiation provides instant penetration of the radiation into the silicone formulation, or combination thereof and curing of the silicone formulation concurrently. Furthermore, the radiation curing, with or without thermal curing, provides a faster cure compared to conventional thermal cure. The faster cure of the radiation curing, with or without thermal curing, further provides an increased adhesion of the silicone formulation with the first polymer material since it is believed that the increased adhesion reaction rate has a rate comparable to a cross-linking reaction, thus with an increased bonding formation between the silicone formulation and the first polymer material. For instance, the first polymer and the silicone formulation of the injection molded article have a peel strength that exhibits cohesive failure. "Cohesive failure" as used herein indicates that the cured silicone formulation or the first polymer ruptures before the bond between the cured silicone formulation and the first polymer fails, when tested in a parallel Peel configuration at room temperature as described in the Examples. In particular, desirable adhesion may be achieved without a primer, a chemical surface treatment, a mechanical surface treatment, or any combination thereof.

The injection molded article further provides physical-mechanical properties such as desirable loss modulus, tensile modulus, compression set, and the like. For instance, the injection molded article has desirable loss modulus, tensile modulus, and compression set compared to a conventionally produced injection molded article, such as an injection molded article that has been cured solely by thermal treatment.

The following examples are provided to better disclose and teach processes and compositions of the present invention. They are for illustrative purposes only, and it must be acknowledged that minor variations and changes can be made without materially affecting the spirit and scope of the invention as recited in the claims that follow.

### EXAMPLES

### Example 1

An LSR formulation is prepared using 96.5 weight% (wt%) of a vinyl containing silicone base (custom made at a Toll Manufacturer, vinyl content at 0.04 mmol/g and filler content at about 25% by wt. of the vinyl containing silicone base), 0.95 wt % of a blend of two hydride crosslinkers (such as Andersil XL-10 and Gelest HMS-993), 1.65 wt % master batch of UV activatable catalyst such as (Trimethyl)methylcyclopentadienyl platinum (IV), equivalent to about 16.5 ppm of the catalyst, and 0.9 wt% of a silane type adhesion promoter. The compounding is done in a high shear mixer like Ross mixer, following typical compounding procedures. Viscosity of the silicone formulation is about 300 to about 500 Pa•s (300,000 centipoise to 500,000 centipoise).

The LSR formulation is tested for adhesive strength with several thermoplastic materials such as a fluoropolymer, polystyrene, acrylonitrile butadiene styrene (ABS), polypropylene, polycarbonate and polyester. The LSR formulation is molded on a thermoplastic substrate with the LSR formulation as the top layer at a thickness of 2.0mm for each layer with a 25.4 mm by 25.4 mm (1 inch by 1 inch) overlap of the two layers. Cure conditions is ultraviolet cure and thermal treatment at about 80°C to about 100°C. Peel strength is tested using an Instron extensometer pull test, with a parallel pull of the two layers in opposite directions. The test has a head speed of two inches per minute until the sample fails. The maximum load is measured as well as the failure mode: adhesive (failure at an interface between the two layers) or cohesive (failure within the silicone material). A copolyester (Tritan™, available from Eastman Chemical Company) and a silane primed polytetrafluoroethylene (PTFE) fluoropolymer both have excellent bonding to the LSR formulation, exhibiting cohesive failure with a maximum loading of greater than 133,4 N (30 lbf (pound force)). Both ABS and polycarbonate have good bonding that is semi-cohesive with a maximum load of greater than 44.5 N (10 lbf). Polystyrene has marginal bonding but with ultraviolet pre-treatment and heating, the adhesion to the LSR formulation improves.

### Example 2

An LSR formulation is prepared using 96.5 wt% of a vinyl containing silicone base (custom made at a Toll Manufacturer, vinyl content at 0.04 mmol/g and filler content at about 25% by wt. of the vinyl containing silicone base), 1.1 wt % of a blend of two hydride crosslinkers (such as Andersil XL-10 and Gelest HMS-993), 1.5 wt % master batch of UV activatable catalyst such as (Trimethyl)methylcyclopentadienyl platinum (IV), equivalent to about 16.5 ppm of the catalyst, and 0.9 wt% of a silane type adhesion promoter (different from above Example 1). The compounding is done in a high shear mixer like Ross mixer, following typical compounding procedures. Viscosity of the formulation is about 300 to about 500 Pa•s (300,000 centipoise to 500,000 centipoise).

The LSR formulation is tested for adhesive strength with several thermoplastic materials such as polystyrene, ABS, polypropylene, polycarbonate and polyester. Peel strength is tested using an Instron extensometer pull test as described for Example 1. A copolyester (Tritan™, available from Eastman Chemical Company) and a silane primed polytetrafluoroethylene (PTFE) fluoropolymer both have excellent bonding to the LSR formulation, exhibiting cohesive failure with a maximum loading of greater than 133,4 N (30 lbf (pound force)). Both ABS and polycarbonate have good bonding that is semi-cohesive with a maximum load of greater than 44.5 N (10 lbf). Polystyrene has marginal bonding but with ultraviolet pre-treatment and heating, the adhesion to the LSR formulation improves.

### Example 3

An LSR formulation similar to Example 1 is prepared. The formulation is tested for adhesive strength with several thermoplastic material substrates such as coPolyester (Tritan™, available from Eastman Chemical Company) with UV surface treatment achieved with a Newport Solar Simulator Model 92190-1000. Results can be seen in Table 1 of a UV surface treatment of the thermoplastic material.

Cure conditions is ultraviolet cure and thermal treatment at about 80°C to about 100°C. Peel strength is tested using an Instron extensometer pull test as described for Example 1.

**Table 1.**

| Surface treatment | Sample | Maximum load N (lb-f) | N/mm (PPI) |
|---|---|---|---|
| 5 Min @ 80°C UV Treated Tritan 731 | 1 | 157.8 (35.48) | 73.40 (419.12) |
| 5 Min @ 80°C UV Treated Tritan 731 | 2 | 153.6 (34.5) | 71.37 (407.55) |
| 5 Min @ 80°C UV Treated Tritan 711 | 3 | 145.5 (32.71) | 67.67 (386.41) |
| 5 Min @ 80°C UV Treated Tritan 711 | 4 | 141.4 (31.79) | 65.77 (375.56) |
| 3 Min @ 80°C UV Treated Tritan 731 | 5 | 179.1 (40.27) | 83.32 (475.79) |
| 2 Min @ 80°C UV Treated Tritan 731 | 6 | 206.3 (46.38) | 95.96 (547.92) (COF) |
| 2 Min @ 80°C UV Treated Tritan 711 | 7 | 194.9 (43.82) | 90.66 (517.68) (COF) |
| 2 Min @ 80°C UV Treated Tritan 711 | 8 | 200.3 (45.03) | 93.17 (532.01) (COF) |
| 2 Min @ 80°C UV - UN Treated Tritan 731 | 9 | 192.0 (43.16) | 89.30 (509.9) (COF) |
| 2 Min @ 80°C UV - UN Treated Tritan 731 | 10 | 193.6 (43.53) | 90.07 (514.3) (COF) |
| 2 Min @ 80°C UV - UN Treated Tritan 711 | 11 | 174.9 (39.33) | 81.37 (464.66) (COF) |
| 2 Min @ 80°C UV - UN Treated Tritan 711 | 12 | 205.2 (46.12) | 95.42 (544.84) COF) |

Successful peel strength is achieved with the surface treated and untreated coPolyester samples when exposed to UV cure. Although not being bound by theory, the level of in situ UV cure and thermal treatment may provide advantageous peel strength without surface treatment of the coPolyester.

Table 2 is further samples on different thermoplastic material substrates. The surface of the thermoplastic material is UV treated with a Newport Solar Simulator Model 92190-1000 at a temperature of 80°C (176°F) at for 2 minutes. Sample sizes are 25.4 mm by 25.4 mm (1 inch by 2 inch).

Cure conditions is ultraviolet cure and thermal treatment at about 80°C to about 100°C. Peel strength is tested using an Instron extensometer pull test as described for Example 1.

**Table 2.**

| Sample | Maximum load (lb-f) | Peel strength (Newton) |
|---|---|---|
| Unprimed Skived PTFE - 254 micrometers (10mil) | 5.732 | 25.50 |
| Primed Natural Skived PTFE - 254 micrometers (10mil) | COF | COF |
| Primed Red Cast PTFE - 76 micrometers (3mil) | 4.271 | 19.00 |

Clearly, successful bonding is achieved with polytetrafluoroethylene (PTFE).

### Example 4

Two LSR formulations similar to Example 1 are prepared. The formulations are tested for adhesive strength with several thermoplastic material substrates or thermoset material substrates such as coPolyester (Tritan™, available from Eastman Chemical Company), polypropylene, polycarbonate, polyester, a silicone, such as a high consistency rubber (HCR). The surface of the thermoplastic materials are UV treated with a 300 W UV LED bulb at a temperature of 80°C (176°F) at 65Volts/5+A for 2 minutes. Comparisons can be seen in Table 3 of a UV surface treatment of the thermoplastic material or thermoset material versus untreated surfaces.

Cure conditions is ultraviolet cure and thermal treatment at about 80°C to about 100°C. Peel strength is tested using an Instron extensometer pull test as described for Example 1.

**Table 3.**

| Treated/Untreated | Substrate material | Sample A Adhesion | Sample B Adhesion |
|---|---|---|---|
| UV treated | Tritan™ 711 | Yes | Yes |
| Un treated | Tritan™ 711 | No | No |
| UV treated | Tritan™ 731 | Yes | Yes |
| Un treated | Tritan™ 731 | No | No |
| UV treated | Polycarbonate | Yes | Yes |
| Un treated | Polycarbonate | Not tested | No |
| Un treated | Silicone HCR | Yes | Yes |

Successful adhesion is achieved with all UV surface treated samples as well as the untreated silicone HCR sample. Although not to be bound by theory, it is theorized that the UV LED provides a weaker source of energy than the source of UV surface treatment in the previous Examples.

## Claims

1. An apparatus for forming an injection molded article, comprising:
a mold having an exterior housing and an interior cavity therein;
a first pumping system to deliver a first polymer material to the mold, the first polymer material comprising a thermoplastic polymer or a thermoset polymer;
a second pumping system to deliver a silicone formulation to the mold, the silicone formulation having a viscosity of about 50 to about 2,000 Pa•s (50,000 to 2,000,000 centipoise);
wherein the first polymer material and the silicone formulation flow into the cavity of the mold; and
a source of radiation energy, wherein the radiation energy substantially cures the silicone formulation within the cavity of the mold to form the injection molded article.

2. A method of forming an injection molded article, comprising:
providing a first polymer material with a first pumping system, wherein the first polymer material comprises a thermoplastic polymer or a thermoset polymer;
providing a silicone formulation within a second pumping system, wherein the silicone formulation has a viscosity of about 50 to about 2,000 Pa•s (50,000 to 2,000,000 centipoise);
providing a mold having an exterior housing and an interior cavity therein;
delivering the first polymer material to the cavity of the mold;
delivering the silicone formulation from the pumping system to the cavity of the mold; and
irradiating the first polymer material, the silicone formulation, or combination thereof with a radiation source to substantially cure the silicone formulation within the cavity of the mold to form the injection molded article.

3. The apparatus of claim 1, wherein the source of radiation energy is disposed between the housing and the cavity.

4. The apparatus of claim 1, wherein the housing of the mold further comprises a source of heat for thermal treatment within the cavity of the mold.

5. The apparatus of claim 4, wherein the thermal treatment is at a temperature of about 20° to about 200°C, such as about 20°C to about 150°C, such as about 20°C to about 100°C, or even about 40°C to about 80°C.

6. The apparatus of claim 4, wherein the application of the radiation energy and the thermal treatment provide an increased adhesion compared to a cure with a single source of energy.

7. The apparatus of claim 4, wherein the radiation energy and the thermal treatment are applied to the silicone formulation in sequence, concurrently, or combination thereof.

8. The apparatus of claim 1, wherein the mold further comprises a port to the cavity to provide a thermoplastic polymer or a thermoset polymer to the cavity.

9. The apparatus of claim 8, wherein the thermoplastic polymer or thermoset polymer is polycarbonate, polystyrene, acrylonitrile butadiene styrene, polyester, silicone, copolyester, a fluoropolymer, polyethylene, polypropylene, or combination thereof.

10. The apparatus of claim 8, wherein the thermoplastic polymer or the thermoset polymer is provided to the cavity prior to providing the silicone formulation.

11. The apparatus of claim 10, wherein a surface of the thermoplastic polymer or the thermoset polymer is treated with at least radiation energy prior to providing the silicone formulation, wherein the treated surface of the thermoplastic polymer or the thermoset polymer has enhanced bonding to the silicone formulation.

12. The apparatus of claim 10, wherein the thermoplastic polymer or the thermoset polymer and the silicone formulation are directly in contact and treated with at least radiation energy.

13. The apparatus of claim 1, wherein the silicone formulation is a liquid silicone rubber (LSR), a room temperature vulcanizable silicone (RTV), or combination thereof.

14. The apparatus of claim 1, wherein the silicone formulation further comprises an adhesion promoter.

## Patentansprüche

1. Vorrichtung zum Bilden eines Spritzgussartikels, umfassend: eine
Form mit einem Außengehäuse und einem Innenhohlraum darin;
ein erstes Pumpsystem, um ein erstes Polymermaterial an die Form abzugeben, wobei das erste Polymermaterial ein thermoplastisches Polymer oder ein duroplastisches Polymer umfasst; ein zweites Pumpsystem zur Abgabe einer Silikonformulierung an die Form, wobei die Silikonformulierung eine Viskosität von etwa 50 bis etwa 2000 Pa· s (50.000 bis 2.000.000 Centipoise) hat;
wobei das erste Polymermaterial und die Silikonformulierung in den Hohlraum der Form fließen; und
eine Strahlungsenergiequelle, wobei die Strahlungsenergie die Silikonformulierung innerhalb des Hohlraums der Form im Wesentlichen aushärtet, um den Spritzgussgegenstand zu bilden.

2. Verfahren zum Bilden eines Spritzgussgegenstands, umfassend:
Bereitstellen eines ersten Polymermaterials mit einem ersten Pumpsystem, wobei das erste Polymermaterial
ein thermoplastisches Polymer oder ein duroplastisches Polymer umfasst;
Bereitstellen einer Silikonformulierung innerhalb eines zweiten Pumpsystems, wobei die Silikonformulierung
eine Viskosität von ungefähr 50 bis ungefähr 2000 Pa· s (50.000 bis 2.000.000 Centipoise) hat;
Bereitstellen einer Form mit einem Außengehäuse und einem Innenhohlraum darin;
Abgeben des ersten Polymermaterials an den Hohlraum der Form;
Abgeben der Silikonformulierung vom Pumpsystem an den Hohlraum der Form; und
Bestrahlen des ersten Polymermaterials, der Silikonformulierung oder einer Kombination davon mit einer Strahlungsquelle, um die Silikonformulierung innerhalb des Hohlraums der Form im Wesentlichen zu härten, um den Spritzgussgegenstand zu bilden.

3. Vorrichtung nach Anspruch 1, wobei die Strahlungsenergiequelle zwischen dem Gehäuse und dem Hohlraum angeordnet ist.

4. Vorrichtung nach Anspruch 1, wobei das Gehäuse der Form ferner eine Wärmequelle zur Wärmebehandlung innerhalb des Hohlraums der Form umfasst.

5. Vorrichtung nach Anspruch 4, wobei die Wärmebehandlung eine Temperatur von etwa 20 °C bis etwa 200 °C hat, wie etwa 20 °C bis etwa 150 °C, wie ungefähr 20 °C bis etwa 100 °C, oder sogar etwa 40 °C bis etwa 80 °C.

6. Vorrichtung nach Anspruch 4, wobei das Aufbringen der Strahlungsenergie und die Wärmebehandlung eine erhöhte Haftung im Vergleich zu einer Aushärtung mit einer einzelnen Energiequelle bereitstellen.

7. Vorrichtung nach Anspruch 4, wobei die Strahlungsenergie und die Wärmebehandlung nacheinander, gleichzeitig oder als Kombination davon auf die Silikonformulierung angewendet werden.

8. Vorrichtung nach Anspruch 1, wobei die Form ferner eine Öffnung zum Hohlraum umfasst, um ein thermoplastisches Polymer oder ein duroplastisches Polymer für den Hohlraum bereitzustellen.

9. Vorrichtung nach Anspruch 8, wobei das thermoplastische Polymer oder das duroplastische Polymer Polycarbonat, Polystyrol, Acrylnitrilbutadienstyrol, Polyester, Silikon, Copolyester, ein Fluorpolymer, Polyethylen, Polypropylen oder eine Kombination davon ist.

10. Vorrichtung nach Anspruch 8, wobei das thermoplastische Polymer oder das duroplastische Polymer dem Hohlraum vor dem Bereitstellen der Silikonformulierung bereitgestellt wird.

11. Vorrichtung nach Anspruch 10, wobei eine Oberfläche des thermoplastischen Polymers oder des duroplastischen Polymers vor dem Bereitstellen der Silikonformulierung mindestens mit Strahlungsenergie behandelt wird, wobei die behandelte Oberfläche des thermoplastischen Polymers oder des duroplastischen Polymers eine verbesserte Bindung an die Silikonformulierung hat.

12. Vorrichtung nach Anspruch 10, wobei das thermoplastische Polymer oder das duroplastische Polymer und die Silikonformulierung in direktem Kontakt stehen und mindestens mit Strahlungsenergie behandelt werden.

13. Vorrichtung nach Anspruch 1, wobei die Silikonformulierung ein flüssiger Silikonkautschuk (LSR), ein bei Raumtemperatur vulkanisierbares Silikon (RTV) oder eine Kombination davon ist.

14. Vorrichtung nach Anspruch 1, wobei die Silikonformulierung ferner einen Adhäsionspromotor umfasst.

## Revendications

1. Appareil de formation d'un article moulé par injection,
comprenant : un moule comportant un logement extérieur et une
cavité intérieure à l'intérieur ;
un premier système de pompage permettant de fournir un premier matériau polymère au moule, le premier matériau polymère comprenant un polymère thermoplastique ou un polymère thermodurcissable ; un second système de pompage permettant de fournir une formulation de silicone au moule, la formulation de silicone ayant une viscosité d'environ 50 à environ 2 000 Pa·s (50 000 à 2 000 000 centipoises) ;
le premier matériau polymère et la formulation de silicone s'écoulant dans la cavité du moule ; et
une source d'énergie de rayonnement, l'énergie de rayonnement durcissant sensiblement la formulation de silicone à l'intérieur de la cavité du moule pour former l'article moulé par injection.

2. Procédé de formation d'une article moulé, comprenant :
l'utilisation d'un premier matériau polymère avec un premier système de pompage, le premier matériau polymère
comprenant un polymère thermoplastique ou un polymère thermodurcissable ;
l'utilisation d'une formulation de silicone dans un second système de pompage, la formulation de silicone ayant une viscosité d'environ 50 à environ 2 000 Pa·s (50 000 à 2 000 000 centipoises) ;
l'utilisation d'un moule ayant un boîtier extérieur et une cavité intérieure à l'intérieur ;
la fourniture du premier matériau polymère dans la cavité du moule ;
la fourniture de la formulation de silicone du système de pompage à la cavité du moule ; et
l'irradiation du premier matériau polymère, de la formulation de silicone ou d'une combinaison de ceux-ci avec une source de rayonnement pour durcir sensiblement la formulation de silicone dans la cavité du moule pour former l'article moulé par injection.

3. Appareil selon la revendication 1, dans lequel la source d'énergie de rayonnement est disposée entre le boîtier et la cavité.

4. Appareil selon la revendication 1, dans lequel le boîtier du moule comprend en outre une source de chaleur destinée à un traitement thermique à l'intérieur de la cavité du moule.

5. Appareil selon la revendication 4, dans lequel le traitement thermique est à une température d'environ 20° à environ 200 °C, telle que d'environ 20 °C à environ 150 °C, telle que d'environ 20 °C à environ 100 °C ou même d'environ 40 °C à environ 80 °C.

6. Appareil selon la revendication 4, dans lequel l'application de l'énergie de rayonnement et le traitement thermique engendrent une adhérence accrue par rapport à un durcissement avec une seule source d'énergie.

7. Appareil selon la revendication 4, dans lequel l'énergie de rayonnement et le traitement thermique sont appliqués à la formulation de silicone en séquence, simultanément ou selon une combinaison de ces deux modes.

8. Appareil selon la revendication 1, dans lequel le moule comprend en outre un orifice orienté vers la cavité pour conduire un polymère thermoplastique ou un polymère thermodurcissable vers la cavité.

9. Appareil selon la revendication 8, dans lequel le polymère thermoplastique ou le polymère thermodurcissable est le polycarbonate, le polystyrène, l'acrylonitrile butadiène styrène, le polyester, le silicone, le copolyester, un fluoropolymère, le polyéthylène, le polypropylène ou une combinaison de ceux-ci.

10. Appareil selon la revendication 8, dans lequel le polymère thermoplastique ou le polymère thermodurcissable est conduit à la cavité avant l'utilisation de la formulation de silicone.

11. Appareil selon la revendication 10, dans lequel une surface du polymère thermoplastique ou du polymère thermodurcissable est traitée avec au moins une énergie de rayonnement avant l'utilisation de la formulation de silicone, la surface traitée du polymère thermoplastique ou du polymère thermodurcissable ayant une liaison améliorée à la formulation de silicone.

12. Appareil selon la revendication 10, dans lequel le polymère thermoplastique ou le polymère thermodurcissable et la formulation de silicone sont directement en contact et traités avec au moins une énergie de rayonnement.

13. Appareil selon la revendication 1, dans lequel la formulation de silicone est un caoutchouc de silicone liquide (LSR), une silicone vulcanisable à température ambiante (RTV) ou une combinaison de ceux-ci.

14. Appareil selon la revendication 1, dans lequel la formulation de silicone comprend en outre un promoteur d'adhérence.
